# EUROPÄISCHE PATENTSCHRIFT

(11) **EP 4 285 279 B1**
(45) Veröffentlichungstag und Bekanntmachung des Hinweises auf die Patenterteilung: **29.10.2025**
(21) Anmeldenummer: 22702391.8
(22) Anmeldetag: 25.01.2022
(51) Int. Cl.: G06K 19/02, G06K 19/077

(54) **KARTENKÖRPER FÜR EINE CHIPKARTE UND CHIPKARTE**
CARD BODY FOR A CHIP CARD, AND CHIP CARD
CORPS DE CARTE POUR CARTE À PUCE ET CARTE À PUCE

(30) Priorität: 26.01.2021 DE 102021000384
(43) Veröffentlichungstag der Anmeldung: 06.12.2023
(73) Patentinhaber: Giesecke+Devrient ePayments GmbH, 81677 München (DE)
(72) Erfinder: BALDISCHWEILER, Michael, 81825 München (DE)
(74) Vertreter: Giesecke+Devrient IP
(86) Internationale Anmeldenummer: PCT/EP2022/025022
(87) Internationale Veröffentlichungsnummer: WO 2022/161738

(56) Entgegenhaltungen:
- WO-A1-2019/136436
- US-A1- 2014 209 691
- US-A1- 2020 387 768

## Beschreibung

Die Erfindung betrifft eine Chipkarte umfassend einen Kartenkörper.

Derartige Chipkarten sind beispielhaft aus US 2014/209691 A1, WO 2019/136436 A1 oder US 2020/387768 A1 bekannt. Anspruch 1 ist gegenüber der US2014/209691 A1 abgegrenzt.

Es werden Kartenkörper mit einem metallischen Kern in Form einer metallischen Kernschicht oder eines metallischen Kernelements betrachtet, sowie Karten mit Dual Interface (DI)-Funktionalität, bei dem der Kartenkörper zum Teil oder vollständig aus Metall besteht. Die Energiekopplung von DI-Systemen mit einem Zwei-Spulensystem (SPS) erfolgt üblicherweise durch Metallaufbauten mit einem Schlitz, durch den der Magnet-/Stromfluß in den Metallflächen umgeleitet wird. Auf diese Weise verhindert der Schlitz einen Kurzschlussstrom.

Das Chipmodul wird in eine Kavität oder Modulöffnung des Kartenkörpers eingesetzt.

Die Funktionsweise einer solchen Karte besteht darin, dass ein Chipmodul verwendet wird, das selbst eine Spule enthält (Coil On Modul). Diese Spule koppelt auf den metallischen Kartenkörper.

Je nach verwendetem Metall bilden sich mehr oder weniger starke Wirbelströme aus. Die Wirbelströme selbst nehmen einen Teil der vom Leser abgegebenen Energie auf. Diese Energie steht dann nicht mehr für die Chipkartencontroller zur Verfügung. In räumlichen oder flächenhaften Metallstücken unterliegt die Stromrichtung von Wirbelströmen turbulenten Veränderungen. Auch wenn die Wirbelströme keine raumfeste Richtung besitzen, trifft auf sie das Lenzsche Gesetz zu wonach Wirbelströme der Ursache ihrer Entstehung entgegenwirken. Zudem unterliegt die Chipkarte noch dem Skin-Effekt.

Aufgabe der vorliegenden Erfindung ist es daher, die Energieeinkopplung in den Kartenkörper und die Chipkarte zu verbessern.

Diese Aufgabe wird durch eine Chipkarte umfassend einen Kartenkörper gemäß dem unabhängigen Patentanspruch gelöst. Ausgestaltungen und Weiterbildungen der Erfindung sind in den abhängigen Ansprüchen angegeben.

Eine erfindungsgemäße Chipkarte umfassend einen Kartenkörper mit einer metallischen Schicht aus einer Stahllegierung sieht vor, dass die Stahllegierung der metallischen Schicht Kohlenstoff mit einem Massenanteil von 0,07 bis 4 %, vorzugsweise 0,1 bis 3 % enthält, und dass die Stahllegierung der metallischen Schicht Schwefel mit einem Massenanteil von 0,01 bis 0,3 %, vorzugsweise 0,02 bis 0,04 % enthält.

Ein Grundgedanke der vorliegenden Erfindung besteht darin, dass eine Legierung für eine metallische Schicht oder einen metallischen Kartenkörper vorgesehen ist, welche einen möglichst kleinen Innenwiderstand oder spezifischen Widerstand hat. Dadurch werden die Verluste verringert, welche durch die Wirbelströme entstehen. Weiterhin kann der Skin-Effekt reduziert werden. Normalerweise würde man in einer Stahllegierung oder Edelstahllegierung Kohlenstoff nicht mit einem größeren Massenanteil vorsehen, da dieser den Stahl spröde und korrosionsanfälliger macht. In dem hier vorliegenden speziellen Anwendungsgebiet von Chipkarten kann von dieser gängigen Lehrmeinung abgewichen werden, da die übliche Belastung des Stahls bei Chipkarten nicht an die Grenzen der Stabilität gelangt und die metallische Schicht mit Kunststoff ummantelt werden kann.

Der hier vorgeschlagene Kartenkörper hat somit den Vorteil, dass die Energieeinkopplung in die Metallkarte wesentlich verbessert ist, so dass die Performance in der Chipkarte steigt. Durch die Reduzierung der Wirbelströme wird zum einen ein schneller Aufbau der magnetischen Feldstärke an einer Spule des Chipmoduls ermöglicht, was einen schnelleren Start des Chips oder des Prozessors erlaubt. Zum anderen wird eine höhere magnetische Feldstärke an einer Spule des Chipmoduls ermöglicht, was einen schnelleren Betrieb infolge einer höheren Betriebsfrequenz des Chips oder des Prozessors erlaubt.

Es kann vorgesehen sein, dass die Stahllegierung eine Edelstahllegierung mit der Bezeichnung 1.43.01 ist. Diese Edelstahllegierung kann auch als X5CrNi18 10 bezeichnet werden und ist ein austenitischer Chrom-Nickel-Stahl.

Es kann ferner vorgesehen sein, dass die Stahllegierung der metallischen Schicht Kupfer mit einem Massenanteil von 0,01 bis 5 %, vorzugsweise 0,1 bis 1 % enthält. Durch das zusätzliche Einbringen von Kupfer kann der spezifische Widerstand sowie der Verlust, der durch Wirbelströme entsteht, weiter verringert werden, so dass die Leistungsfähigkeit des Chips weiter erhöht werden kann. Auch hier kann von der gängigen Lehrmeinung abgewichen werden, da die übliche Belastung des Stahls nicht an die Grenzen der Stabilität gelangt.

Es kann vorgesehen sein, dass ein Schlitz in der metallischen Schicht zwischen einem Rand der metallischen Schicht und der Modulöffnung vorgesehen ist. Der Schlitz reduziert Wirbelströme und kann einen Kurzschlussstrom verhindern.

Es kann ferner vorgesehen sein, dass jeweils eine Kunststoffdeckschicht auf zwei Hauptflächen der metallischen Schicht vorgesehen ist. Die Kunststoffdeckschicht schützen die metallische Schicht und bieten optische Gestaltungsmöglichkeiten.

Erfindungsgemäß ist vorgesehen, dass in der metallischen Schicht eine Modulöffnung zum Aufnehmen eines Chipmoduls vorgesehen ist. Diese Modulöffnung kann ebenfalls, teilweise oder vollständig, in den Kunststoffdeckschichten ausgebildet sein. Die Modulöffnung kann ein Durchgangsloch oder ein Sackloch sein.

Eine erfindungsgemäße Chipkarte umfasst einen Kartenkörper wie zuvor beschrieben, mit oder ohne Kunststoffdeckschichten und ein zumindest teilweise in die Modulöffnung des Kartenkörpers eingebettetes Chipmodul. Es gelten die gleichen Vorteile und Modifikationen wie zuvor beschrieben.

Es kann vorgesehen sein, dass das Chipmodul eine Spule und einen Chip umfasst. Über die Spule mit ihren Windungen wird der Chip mit Energie und/oder Signalen versorgt.

Die vorliegende Erfindung wird nachfolgend mit Bezug auf die beiliegenden Zeichnungen beispielhaft beschrieben. Darin zeigen
- Fig. 1:: eine Draufsicht eines Kartenkörpers für eine Chipkarte;
- Fig. 2:: eine Schnittdarstellung des Kartenkörpers aus Fig. 1 gemäß der Linie I-I; und
- Fig. 3:: eine Schnittdarstellung einer Chipkarte mit Kartenkörper und Chipmodul.

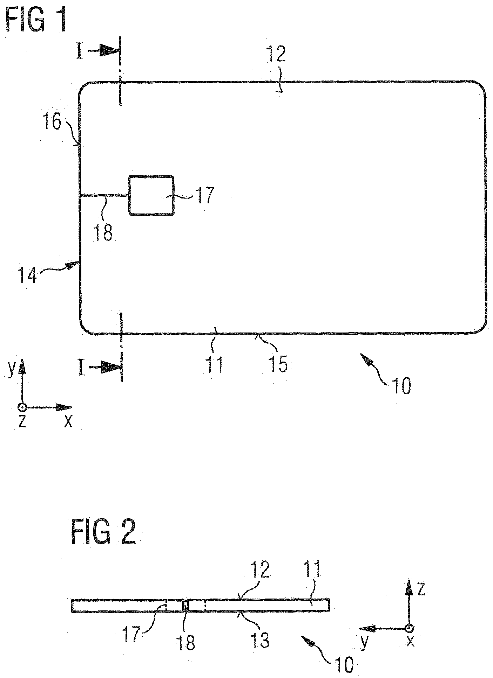

Fig. 1 zeigt einen Kartenkörper 10 für eine Chipkarte. Der Kartenkörper 10 hat einen metallischen Grundkörper 11 mit zwei gegenüberliegenden Hauptflächen, von denen eine Hauptfläche 12 in Fig. 1 sichtbar ist. Die andere, gegenüberliegende Hauptfläche 13 ist in Fig. 2 dargestellt. Die beiden Hauptflächen 12, 13 verlaufen parallel zueinander und sind durch eine umlaufende Umfangsfläche 14 verbunden.

Der metallische Grundkörper 11 hat eine rechteckige Form in einer x-y-Ebene, in der die Umfangsfläche 14 mit zwei in x-Richtung verlaufenden Längsflächen 15 und zwei in y-Richtung verlaufenden Stirnflächen 16 liegt. Die Dicke des Grundkörpers 11 erstreckt sich in z-Richtung.

Der metallische Grundkörper 11 kann zum Beispiel in Form eines Kerns oder einer Schicht aus einer Stahllegierung oder Edelstahllegierung wie V2A 1.43.01 beispielsweise mit einer Dicke von 400 µm vorliegen. Die Dicke des Grundkörpers 11 kann zum Beispiel zwischen 50 µm und 920 µm betragen.

Die Stahllegierung oder Edelstahllegierung der metallischen Schicht 11 kann Kohlenstoff mit einem Massenanteil von 0,07 bis 4 %, vorzugsweise 0,1 bis 3 %, und/oder Schwefel mit einem Massenanteil von 0,01 bis 0,3 %, vorzugsweise 0,02 bis 0,04 % enthalten.

Durch den höheren Kohlenstoffgehalt kann der spezifische Widerstand der Legierung gesenkt werden, wodurch die durch Wirbelströme entstehenden Verluste reduziert werden. Die durch den hier hohen Kohlenstoffgehalt hervorgerufenen mechanischen oder strukturellen Nachteile, wie insbesondere erhöhte Sprödigkeit, können bei Kartenkörpern 10 und Chipkarten vernachlässigt werden.

Es hat sich experimentell gezeigt, dass ein relativ geringer Schwefelgehalt ebenfalls die durch Wirbelströme entstehenden Verluste reduziert. In einer Stahllegierung bildet Schwefel im Eisen das Eisensulfid FeS. Dieses Sulfid stellt einen sogenannten nichtmetallischen Einschluss dar. Obwohl Schwefel im Allgemeinen als Begleitelement im Stahl wegen der Nachteile von mechanischen Eigenschaften unerwünscht ist, wird es hier für einen Kartenkörper 10 und eine Chipkarte gewinnbringend eingesetzt.

Auch eine Kombination der obigen Kohlenstoffgehalte mit den obigen Schwefelgehalten reduziert die durch Wirbelströme entstehenden Verluste. Im Rahmen der vorliegenden Erfindung hat sich gezeigt, dass eine Optimierung des Werkstoffs auf die Reduzierung der durch Wirbelströme entstehenden Verluste gänzlich anderen Kriterien folgt als die übliche mechanische Optimierung der Stähle und sich damit andere Legierungen ergeben.

Die Stahllegierung oder Edelstahllegierung der metallischen Schicht 11 kann Kupfer mit einem Massenanteil von 0,01 bis 5 %, vorzugsweise 0,1 bis 1 % enthalten.

Durch den höheren Kupfergehalt kann der spezifische Widerstand der Legierung gesenkt werden, wodurch die durch Wirbelströme entstehenden Verluste reduziert werden. Auch eine Kombination der obigen Kupfergehalte mit den obigen Kohlenstoffgehalten und/oder Schwefelgehalten reduziert die durch Wirbelströme entstehenden Verluste.

Die obigen Angaben zu den Massenanteilen von Kohlenstoff, Schwefel und Kupfer können als Zusatzangaben für Edelstahllegierungen wie zum Beispiel der Edelstahllegierung 1.43.01 angesehen werden. Das heißt, dass die sonstigen Legierungsanteile außer Kohlenstoff, Schwefel und Kupfer der Edelstahllegierung 1.43.01 entsprechen können und dass die Legierungsanteile von Kohlenstoff, Schwefel und/oder Kupfer den oben genannten entsprechen.

Eine Modulöffnung 17 für ein Chipmodul ist in der Hauptfläche 12 des Kartenkörpers 10 ausgenommen. Die Modulöffnung 17 erstreckt sich hier durch den gesamten metallischen Grundkörper 11, kann aber auch als Sacklochöffnung ausgebildet sein.

Sie kann auch erst später erzeugt werden. Die Modulöffnung 17 wird beispielsweise mittels eines Laserarbeitsganges oder Fräsarbeitsganges erstellt.

Für die Herstellung der Kartenkörper 10 kann die beschriebene metallische Legierung zum Beispiel zu einem Rohbogen oder einer Platte ausgewalzt werden. Aus dieser Platte werden dann die einzelnen Kartenkörper 10 oder Grundkörper 11 aus dem Bogen zum Beispiel mittels Laser oder Wasserschneiden ausgeschnitten oder ausgefräst.

In dem metallischen Grundkörper 11 ist ein Schlitz 18 vorgesehen, der sich von der Umfangsfläche 14 oder mit anderen Worten von einer Außenkante des metallischen Grundkörpers 11 zu der Modulöffnung 17 erstreckt. Somit verbindet der Schlitz 18 die Modulöffnung 17 mit der Umfangsfläche 14. Der Schlitz 18 verläuft in y-Richtung, das heißt parallel zu der Längsfläche 15. Der Schlitz 18 hat zum Beispiel eine Breite zwischen 30 µm und 100 µm, bevorzugt zwischen 50 µm und 80 µm.

In Fig. 1 ist der Schlitz 18 auf einer linken Seite dargestellt. Der Schlitz 18 kann auch an einer rechten, oberen oder unteren Seite des Grundkörpers 11 angeordnet sein. Der Schlitz 18 dient zur Vermeidung von Kurzschlussströmen beziehungsweise Wirbelströmen.

Fig. 2 zeigt eine Schnittdarstellung des Kartenkörpers 10 gemäß der Linie I-I aus Fig. 1. Erkennbar ist, dass der Schlitz 18 den Grundkörper 11 in der Dicke oder Höhe, das heißt der z-Richtung, vollständig durchtrennt. Der Schlitz 18 verbindet somit die beiden Hauptflächen 12, 13. Der Schlitz 18 reicht in y-Richtung bis zur Modulöffnung 17.

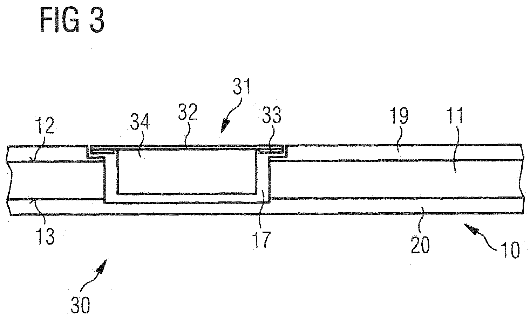

Fig. 3 zeigt eine Schnittdarstellung einer Chipkarte 30 mit einem Kartenkörper 10 wie zuvor beschrieben und einem Chipmodul 31.

Der Kartenkörper 10 umfasst den Grundkörper 11 zum Beispiel in Form einer metallischen Schicht in Form eines Kerns oder einer Schicht aus einer Edelstahllegierung mit einer Dicke von 400 µm.

Eine Hauptfläche 12 oder Oberfläche des Grundkörpers 11 ist mit einer Kunststoffschicht 19 bedeckt oder laminiert. Eine gegenüberliegende zweite Hauptfläche 13 oder Oberfläche des Grundkörpers 11 ist mit einer weiteren Kunststoffschicht 20 bedeckt oder laminiert. Die beiden Kunststoffschichten 19, 20 können zum Beispiel aus PET, PC, PVC oder PP bestehen und eine Dicke von 200 µm haben. Die Dicke des gesamten Kartenkörpers 10 sollte die maximale Dicke eines Chipkartenkörpers gemäß ISO 7810 nicht übersteigen.

Die Modulöffnung 17 ist in der Hauptseite oder Oberfläche des Kartenkörpers 10 ausgenommen. Die Modulöffnung 17 erstreckt sich durch die gesamte Kunststoffschicht 19, den gesamten metallischen Grundkörper 11 sowie einen Teil der Kunststoffschicht 20. Die Modulöffnung 17 wird beispielsweise mittels eines Laserarbeitsganges oder Fräsarbeitsganges erstellt.

Das Chipmodul 31 ist in der Modulöffnung 17 angeordnet und dort zum Beispiel verklebt. Das Chipmodul 31 umfasst eine Kontaktflächenstruktur 32, die eine Spule 33 trägt. Die Kontaktflächenstruktur 32 liegt in einem Randbereich der Modulöffnung 17 auf der Kunststoffschicht 19 auf.

Das Chipmodul 31 umfasst ferner einen Chip 34, der zum Beispiel in einer Vergussmasse an einer Unterseite der Kontaktflächenstruktur 32 befestigt ist. Über die Spule 33 wird der Chip 34 mit Energie und/oder Signalen versorgt. So kann ein aus dem metallischen Grundkörper 11 austretendes elektromagnetisches Feld in die Spule 33 eingekoppelt werden.

Die hier vorgeschlagene Stahllegierung oder Edelstahllegierung der metallischen Schicht 11 ermöglicht eine Steigerung der von der Spule 33 aufgenommenen Energie da die durch Wirbelströme erzeugten Energieverluste reduziert werden.

Durch die Reduzierung der Wirbelströme wird zum einen ein schneller Aufbau der magnetischen Feldstärke an der Spule 33 des Chipmoduls 31 ermöglicht, was einen schnelleren Start des Prozessors oder des Chips 34 erlaubt. Zum anderen wird eine höhere magnetische Feldstärke an einer Spule 33 des Chipmoduls 31 ermöglicht, was einen schnelleren Betrieb infolge einer höheren Betriebsfrequenz des Prozessors oder des Chips 34 erlaubt.

## Patentansprüche

1. Chipkarte (30) umfassend einen Kartenkörper (10) mit einer metallischen Schicht (11) aus einer Stahllegierung, wobei in der metallischen Schicht (11) eine Modulöffnung (17) zum Aufnehmen eines Chipmoduls (31) vorgesehen ist, wobei die Chipkarte (30) ein zumindest teilweise in die Modulöffnung (17) des Kartenkörpers (10) eingebettetes, eine Spule (33) und einen Chip (34) umfassendes Chipmodul (31) umfasst, **dadurch gekennzeichnet,**
**dass** die Stahllegierung der metallischen Schicht (11) Kohlenstoff mit einem Massenanteil von 0,07 bis 4 % enthält, und
**dass** die Stahllegierung der metallischen Schicht (11) Schwefel mit einem Massenanteil von 0,01 bis 0,3 % enthält.

2. Chipkarte (30) nach Anspruch 1, **dadurch gekennzeichnet, dass** die Stahllegierung der metallischen Schicht (11) Schwefel mit einem Massenanteil von 0,02 bis 0,3 % enthält.

3. Chipkarte (30) nach Anspruch 1, **dadurch gekennzeichnet, dass** die Stahllegierung der metallischen Schicht (11) Schwefel mit einem Massenanteil von 0,02 bis 0,04 % enthält.

4. Chipkarte (30) nach einem der Ansprüche 1 bis 3, **dadurch gekennzeichnet, dass** die Stahllegierung der metallischen Schicht (11) Kohlenstoff mit einem Massenanteil von 0,1 bis 3 % enthält.

5. Chipkarte (30) nach einem der Ansprüche 1 bis 4, **dadurch gekennzeichnet, dass** die Stahllegierung eine Edelstahllegierung (1) mit der Bezeichnung 1.43.01 ist.

6. Chipkarte (30) nach einem der Ansprüche 1 bis 5, **dadurch gekennzeichnet, dass** die Stahllegierung der metallischen Schicht (11) Kupfer mit einem Massenanteil von 0,01 bis 5 % enthält.

7. Chipkarte (30) nach einem der Ansprüche 1 bis 5, **dadurch gekennzeichnet, dass** die Stahllegierung der metallischen Schicht (11) Kupfer mit einem Massenanteil von 0,1 bis 1 % enthält.

8. Chipkarte (30) nach einem der Ansprüche 1 bis 7, **dadurch gekennzeichnet, dass** ein Schlitz (18) in der metallischen Schicht (11) zwischen einem Rand der metallischen Schicht (11) und der Modulöffnung (17) vorgesehen ist.

9. Chipkarte (30) nach einem der Ansprüche 1 bis 8, **dadurch gekennzeichnet, dass** jeweils eine Kunststoffdeckschicht (19, 20) auf zwei Hauptflächen (12, 13) der metallischen Schicht (11) vorgesehen ist.

## Claims

1. Chip card (30) comprising a card body (10) having a metallic layer (11) composed of a steel alloy, wherein a module opening (17) for receiving a chip module (31) is provided in the metallic layer (11), wherein the chip card (30) comprises a chip module (31) embedded at least partially into the module opening (17) of the card body (10) and comprising a coil (33) and a chip (34), **characterized**
**in that** the steel alloy of the metallic layer (11) contains carbon with a mass fraction of 0.07% to 4%, and in that the steel alloy of the metallic layer (11) contains sulfur with a mass fraction of 0.01% to 0.3%.

2. Chip card (30) according to Claim 1, **characterized in that** the steel alloy of the metallic layer (11) contains sulfur with a mass fraction of 0.02% to 0.3%.

3. Chip card (30) according to Claim 1, **characterized in that** the steel alloy of the metallic layer (11) contains sulfur with a mass fraction of 0.02% to 0.04%.

4. Chip card (30) according to any of Claims 1 to 3, **characterized in that** the steel alloy of the metallic layer (11) contains carbon with a mass fraction of 0.1% to 3%.

5. Chip card (30) according to any of Claims 1 to 4, **characterized in that** the steel alloy is a stainless steel alloy (1) with the designation 1.43.01.

6. Chip card (30) according to any of Claims 1 to 5, **characterized in that** the steel alloy of the metallic layer (11) contains copper with a mass fraction of 0.01% to 5%.

7. Chip card (30) according to any of Claims 1 to 5, **characterized in that** the steel alloy of the metallic layer (11) contains copper with a mass fraction of 0.1% to 1%.

8. Chip card (30) according to any of Claims 1 to 7, **characterized in that** a slot (18) is provided in the metallic layer (11) between an edge of the metallic layer (11) and the module opening (17).

9. Chip card (30) according to any of Claims 1 to 8, **characterized in that** a plastics outer layer (19, 20) is provided on each of two main faces (12, 13) of the metallic layer (11).

## Revendications

1. Carte à puce (30) comprenant un corps de carte (10) comportant une couche métallique (11) constituée d'un alliage d'acier, une ouverture de module (17) étant ménagée dans la couche métallique (11) pour recevoir un module de puce (31), la carte à puce (30) comprenant un module de puce (31) qui comprend une bobine (33) et une puce (34) et qui est au moins partiellement intégré dans l'ouverture de module (17) du corps de carte (10), **caractérisée**
**en ce que** l'alliage d'acier de la couche métallique (11) contient de 0,07 à 4 % en poids de carbone, et
**en ce que** l'alliage d'acier de la couche métallique (11) contient de 0,01 à 0,3 % en poids de soufre.

2. Carte à puce (30) selon la revendication 1, **caractérisée en ce que** l'alliage d'acier de la couche métallique (11) contient de 0,02 à 0,3 % en poids de soufre.

3. Carte à puce (30) selon la revendication 1, **caractérisée en ce que** l'alliage d'acier de la couche métallique (11) contient de 0,02 à 0,04 % en poids de soufre.

4. Carte à puce (30) selon l'une quelconque des revendications 1 à 3, **caractérisée en ce que** l'alliage d'acier de la couche métallique (11) contient de 0,1 à 3 % en poids de soufre.

5. Carte à puce (30) selon l'une quelconque des revendications 1 à 4, **caractérisée en ce que** l'alliage d'acier est un alliage d'acier inoxydable (1) avec la désignation 1.43.01.

6. Carte à puce (30) selon l'une quelconque des revendications 1 à 5, **caractérisée en ce que** l'alliage d'acier de la couche métallique (11) contient de 0,01 à 5 % en poids de cuivre.

7. Carte à puce (30) selon l'une quelconque des revendications 1 à 5, **caractérisée en ce que** l'alliage d'acier de la couche métallique (11) contient de 0,1 à 1 % en poids de cuivre.

8. Carte à puce (30) selon l'une quelconque des revendications 1 à 7, **caractérisée en ce qu'**une fente (18) est ménagée dans la couche métallique (11) entre un bord de la couche métallique (11) et l'ouverture de module (17).

9. Carte à puce (30) selon l'une quelconque des revendications 1 à 8, **caractérisée en ce qu'**une couche de recouvrement en matière plastique (19, 20) est respectivement prévue sur deux faces principales (12, 13) de la couche métallique (11).
